# FASCICULE DE BREVET EUROPEEN

(11) **EP 3 078 512 B1**
(45) Date de publication et mention de la délivrance du brevet: **27.06.2018**
(21) Numéro de dépôt: 16162485.3
(22) Date de dépôt: 25.03.2016
(51) Int. Cl.: B60C 27/06, B60C 27/10

(54) **DISPOSITIF ANTIDERAPANT POUR ROUE DE VEHICULE AUTOMOBILE**
RUTSCHFESTE VORRICHTUNG FÜR KRAFTFAHRZEUGREIFEN
ANTI-SLIP DEVICE FOR A MOTOR VEHICLE WHEEL

(30) Priorité: 08.04.2015 FR 1553000
(43) Date de publication de la demande: 12.10.2016
(73) Titulaire: Joubert Productions, 63600 Ambert (FR)
(72) Inventeur: JOUBERT, Xavier, 63600 AMBERT (FR); JOUBERT, Thierry, 63600 AMBERT (FR); KAELIN, Régis, 63600 SAINT FERREOL DES CÔTES (FR); PAILLARD, Thomas, 63670 ORCET (FR)
(74) Mandataire: Cabinet Laurent & Charras

(56) Documents cités:
- EP-A1- 0 376 427
- EP-A1- 2 206 615
- EP-A1- 2 335 951

## Description

### DOMAINE DE L'INVENTION

La présente invention se rapporte au domaine des dispositifs antidérapants pour pneumatiques de roues de véhicules automobiles.

De tels dispositifs se présentent généralement sous la forme d'un chemin de roulement comportant des moyens dotés de propriétés antidérapantes, ledit chemin de roulement étant maintenu en position sur la bande de roulement du pneumatique. De tels dispositifs antidérapants sont ainsi utilisés sur des roues de véhicules en cas de présence de neige ou de glace sur la chaussée.

L'invention vise plus particulièrement un dispositif antidérapant de type frontal, c'est-à-dire fixé sur la surface visible de la jante d'une roue de véhicule automobile. A cet effet, un tel dispositif comporte des bras radiaux, solidarisés à un organe central, lui-même fixé à la jante de la roue. Cet organe central est destiné à transmettre aux bras radiaux une force de plaquage contre le flanc externe du pneumatique, induisant corollairement le maintien du chemin de roulement situé à leur extrémité sur la bande de roulement du pneumatique concerné. Un tel couple permet de solliciter en flexion les bras radiaux et ainsi de plaquer le chemin de roulement contre la bande de roulement du pneumatique considéré.

L'invention est plus particulièrement dirigée vers le dispositif de fixation de l'organe central sur la jante de la roue considérée.

### ETAT ANTERIEUR DE LA TECHNIQUE

Afin d'assurer la fixation de l'organe central, duquel émanent les bras radiaux, sur la jante d'une roue de véhicule automobile, il est connu de mettre en place un système de fixation constitué d'une part, d'un boulon de fixation sur au moins l'un des écrous de la jante, à l'extrémité libre duquel est fixé un lien, flexible ou non, susceptible d'être tendu au niveau dudit organe central pour assurer le plaquage dudit organe central contre la jante et corollairement, le plaquage des bras radiaux contre les flancs du pneumatique de la roue considérée (voir par exemple EP 1 409 277 et EP 0 376 427).

On relève ainsi qu'est associé au boulon de fixation sur la jante un bras s'étendant sensiblement perpendiculairement à l'axe dudit boulon, à l'extrémité duquel est fixé le bras ou corde de serrage de l'organe central contre la jante.

L'expérience démontre que lors de la mise en place d'un tel dispositif antidérapant, la mise en oeuvre de cet organe de fixation sur la jante de la roue est malaisée en raison de ce bras intermédiaire et du lien de serrage qui lui est associé. Cette difficulté de mise en place est d'autant plus exacerbée que la pose de tels dispositifs antidérapants s'effectue quasiment systématiquement dans des situations extrêmes, lorsque le véhicule cesse d'adhérer sur la neige ou sur la glace, outre dans une situation de stress peu propice à la réflexion et à l'agilité.

L'objectif recherché par la présente invention est de simplifier de manière importante la mise en place d'un tel dispositif antidérapant de type frontal.

### EXPOSE DE L'INVENTION

A cet effet, l'invention vise un dispositif antidérapant pour roue de véhicule automobile comprenant :
- un chemin de roulement destiné à être plaqué sur la bande de roulement d'un pneumatique de roue de véhicule ;
- des bras radiaux permettant de maintenir ledit chemin de roulement sur la bande de roulement dudit pneumatique, lesdits bras radiaux étant reliés à un organe central fixé sur la jante de la roue considérée par l'intermédiaire d'un ensemble solidarisable à l'un des écrous de ladite jante et constitué :
   ∘ d'un boulon de fixation sur ledit écrou ;
   ∘ d'un bras de couple, solidarisé de manière réversible à l'extrémité libre dudit boulon et orienté perpendiculairement à l'axe de révolution du boulon ;
   ∘ d'un organe de traction solidarisé au voisinage de l'autre extrémité dudit bras.

Selon l'invention :
- le boulon de fixation est pourvu au voisinage de son extrémité libre, c'est-à-dire opposée à celle venant coopérer avec l'un des écrous de la jante, d'une gorge annulaire ;
- le bras de couple est muni de moyens aptes à coopérer avec la gorge annulaire, afin de solidariser / désolidariser le boulon de fixation sur le bras de couple.

En d'autres termes, l'invention consiste à permettre la désolidarisation du bras de couple et du boulon de fixation, de telle sorte à permettre à l'utilisateur, lorsqu'il souhaite mettre en place le dispositif antidérapant de l'invention, tout d'abord de visser ledit boulon sur l'un des écrous de la jante considérée et ensuite et seulement après fixation effective dudit boulon, de rapporter le bras de couple sur l'extrémité dudit boulon, afin consécutivement, de procéder à la mise en place dudit dispositif antidérapant sur le pneumatique considéré. On conçoit de fait l'utilité d'un tel dispositif qui permet de drastiquement simplifier l'opération de mise en place d'une chaîne frontale sur un pneumatique.

Selon une caractéristique de l'invention, le bras de couple comporte une ouverture traversante, partiellement obturable au moyen d'une lame rigide munie d'une lumière elle-même traversante, coulissante au sein du bras de couple selon une direction perpendiculaire à l'axe de révolution du boulon, et maintenue par défaut en position d'obturation partielle de l'ouverture traversante du bras de couple, cette lame étant destinée à coopérer avec la gorge annulaire du boulon.

Selon une autre caractéristique de l'invention, ladite lame coopère avec un ressort, notamment filaire, aux fins d'assurer le maintien par défaut de la lame en position d'obturation.

Selon encore une autre caractéristique avantageuse de l'invention, la lame présente une saillie externe, émergeant du bras de couple et actionnable par l'utilisateur afin de libérer l'ouverture traversante et corollairement, d'assurer la solidarisation / désolidarisation du bras de couple sur et hors du boulon de fixation.

Selon une autre caractéristique avantageuse de l'invention, l'extrémité libre du boulon de fixation présente une ouverture de section transversale non circulaire, apte à coopérer avec un outil, et notamment une clé de forme correspondante, type clef 6 pans, aux fins d'assurer sa fixation ou sa désolidarisation sur et hors de l'un des écrous de la jante.

Cette clé est avantageusement fixable réversiblement au sein du bras de couple, pourvu à cet effet d'un logement, ou, est intégrée dans le bras, notamment par moulage, ce dernier faisant alors fonction de manche de la clé.

Selon une autre caractéristique avantageuse de l'invention, l'extrémité supérieure du boulon de fixation, c'est-à-dire opposée à la zone de fixation sur l'écrou de la jante, adopte un profil polygonal, et notamment hexagonal, et l'ouverture traversante ménagée au sein du bras de couple et de forme complémentaire, favorisant de la sorte l'orientation du bras de couple par rapport audit boulon de serrage.

Selon une autre forme de réalisation de l'invention, le bras de couple comporte un fil rond de verrouillage avec effet de rappel élastique en direction d'une lumière traversante ménagée au sein dudit bras de couple et destinée à recevoir ladite extrémité libre du boulon de fixation, ledit fil maintenant par défaut en position opérationnelle de blocage le boulon sur le bras de couple par coopération avec la gorge annulaire, et étant actionnable par l'utilisateur afin de permettre la désolidarisation du bras de couple hors du boulon de verrouillage.

### DESCRIPTION SOMMAIRE DES FIGURES

La manière dont l'invention peut être réalisée, et les avantages qui en découlent, ressortiront mieux de l'exemple de réalisation qui suit, donné à titre indicatif, et non limitatif, à l'appui des figures annexées, dans lesquelles :
- la figure 1 est une représentation schématique d'un dispositif antidérapant conforme à l'état antérieur de la technique, mis en place sur un pneumatique ;

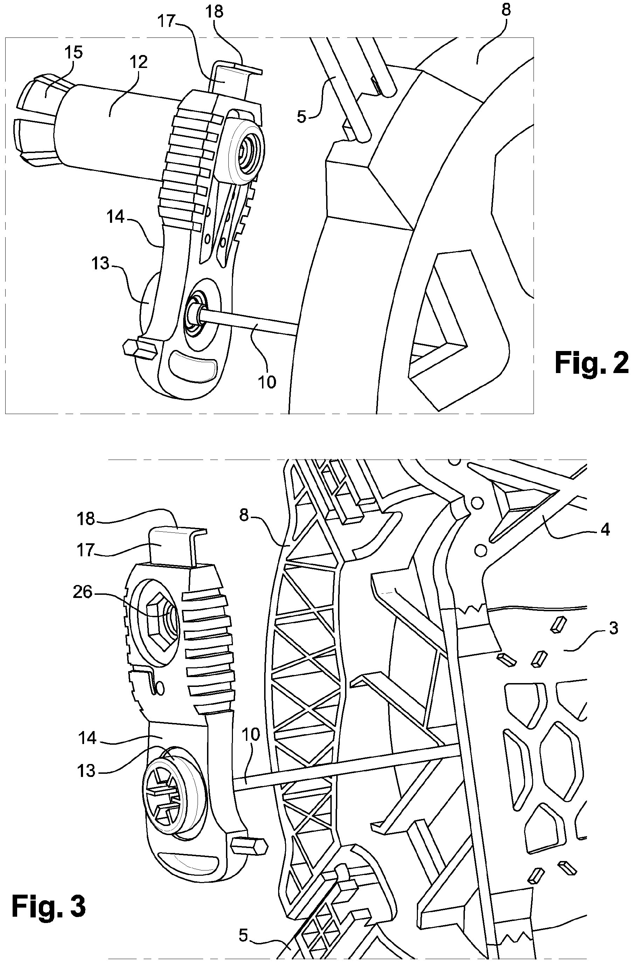

- la figure 2 est une représentation schématique illustrant une partie du dispositif antidérapant conforme à l'invention, dont la figure 3 est une autre vue au sein de laquelle le boulon de fixation a été enlevé ;

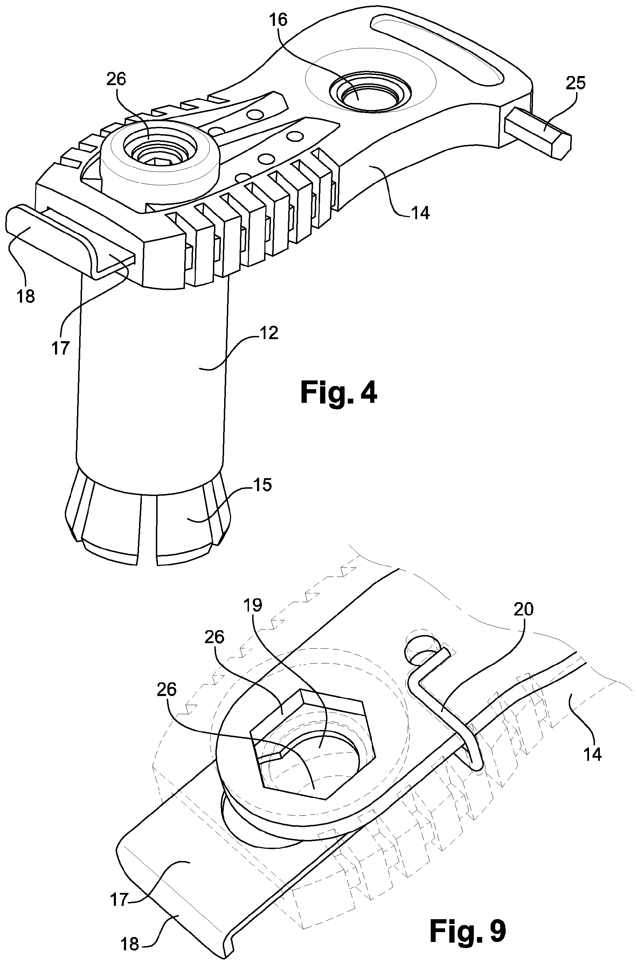

- la figure 4 est une représentation schématique en perspective de l'ensemble constitué par le boulon de fixation muni du bras de couple solidarisé à ce dernier selon un premier mode de réalisation de l'invention ;
- la figure 5 est une représentation schématique illustrant le boulon de fixation solidarisé au bras de couple en position bloquée, dont la figure 6 est une figure en section partielle de ladite première forme de réalisation de l'invention ;
- les figures 7 et 8 sont des vues analogues aux figures 5 et 6 en position de libération du boulon par rapport au bras de couple ;
- la figure 9 est vue du dessous du bras de couple conforme à l'invention ;
- les figures 10 à 12 illustrent une variante de ce premier mode de réalisation, respectivement du boulon de fixation, et de sa coopération avec le bras de couple ;
- les figures 13 à 16 illustrent un second mode de réalisation de l'invention, respectivement du boulon de fixation, de sa coopération simplifiée puis détaillée avec le bras de couple.

### DESCRIPTION DETAILLEE DE L'INVENTION

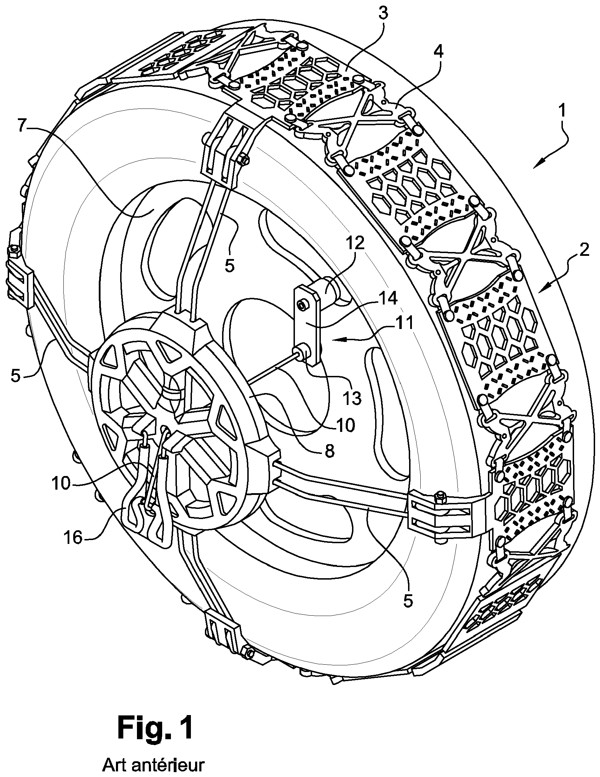

On a donc représenté en relation avec la figure 1 un dispositif antidérapant **1** de type à montage frontal conforme à l'art antérieur, monté sur la bande de roulement **2** d'un pneumatique de roue de véhicule automobile.

Fondamentalement, ce dispositif antidérapant **1** comporte un flasque central **8**, à partir duquel s'étendent des bras radiaux **5**, en l'espèce quatre dans l'exemple décrit.

Le dispositif comprend en outre des moyens mécaniques associés au flasque central **8** et plus particulièrement destinés à assurer le plaquage des bras radiaux **5** contre le flanc externe dudit pneumatique.

L'effort axial transmis au flasque central **8**, du fait de la mise en oeuvre de ces moyens mécaniques, permet de générer une force de plaquage aux bras radiaux **5**, et corollairement, de maintenir à la bonne position le chemin de roulement du dispositif antidérapant sur la bande de roulement du pneumatique de la roue du véhicule.

Dans l'exemple décrit, ce chemin de roulement est constitué d'une pluralité d'éléments **3** antidérapants, typiquement des patins en polyuréthane, joints entre eux au moyen d'éléments de jonction **4**. Cependant, cette bande de roulement pourrait être également constituée d'une bande métallique, textile ou autre.

Les moyens mécaniques de fixation du flasque central **8** sur la roue du véhicule sont typiquement constitués d'un organe de traction, en l'espèce flexible **10**, solidarisé à un bras de couple **14**, lui-même solidaire d'un boulon de fixation **12** apte à venir se fixer sur l'un des écrous de la jante **7** de la roue considérée. Cet organe de traction flexible **10** est actionnable au moyen d'un levier de mise sous tension **16**, actionnable par l'utilisateur une fois le boulon **12** fixé sur un écrou de la jante **7**, et ainsi, assurant le plaquage du flasque **8** contre la jante **7**, et donc corollairement des bras radiaux **5** contre le flanc externe du pneumatique considéré.

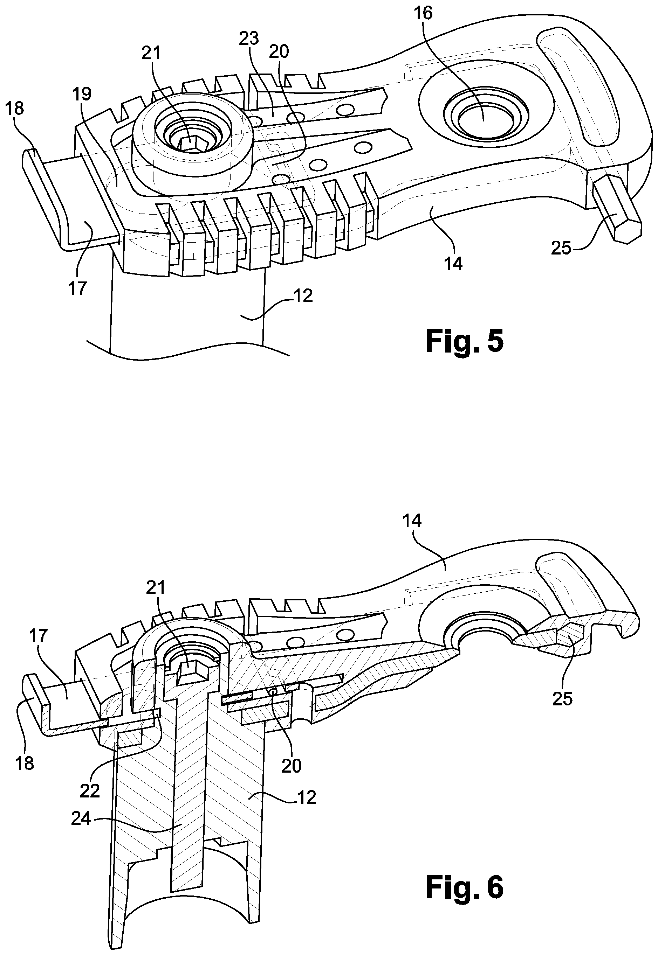

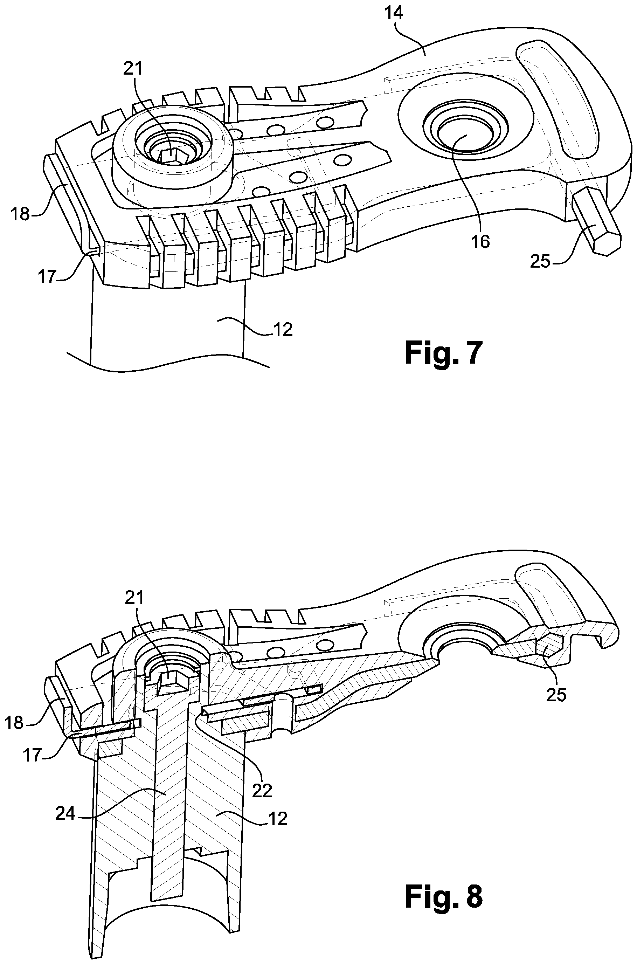

Selon l'invention, le boulon de fixation **12** est désolidarisable de manière réversible du bras de couple **14** et ce, par simple pression par l'utilisateur sur une languette **18** actionnant une lame **17**, tel que décrit plus en détail en relation avec les figures 5 à 8.

A cet effet, et selon une première forme de réalisation, le bras de couple **14** comporte une lumière traversante **26**, permettant l'introduction de l'extrémité supérieure du boulon de fixation **12**. Ledit boulon présente, au voisinage de son extrémité supérieure, une gorge annulaire **22** destinée à coopérer, lorsque le boulon est introduit dans la lumière traversante **26** avec une lame **17** coulissant dans le plan du bras de couple **14**, et donc sensiblement perpendiculairement par rapport à l'axe de révolution du boulon **12** A cet effet, le bras de couple est pourvu de gorges (non représentées) apte à recevoir ladite lame **17**. Cette lame **17** est elle-même pourvue d'une ouverture partiellement traversante **19**, de telle sorte à obturer partiellement la lumière **26**.

La lame **17**, sous l'action de l'utilisateur au niveau d'une saillie recourbée **18**, permet donc de libérer la coopération de ladite lame **17** avec la gorge annulaire **22** ménagée au voisinage de l'extrémité supérieure du boulon de fixation **12**.

Par défaut, la lame **17** est maintenue en position d'obturation partielle, c'est-à-dire, en coopération avec la gorge annulaire **22** du boulon de fixation **12**. Pour ce faire, elle est soumise à l'action d'un ressort filaire **20**, dont l'extrémité coopère avec un plan incliné **23** tel qu'on peut l'observer sur la figure 5.

Ainsi donc, pour désolidariser le boulon de fixation **12** du bras de couple **14**, l'utilisateur appuie simplement sur la saillie **18**, induisant le coulissement de la lame **17** et corollairement, la libération de la gorge **22**.

Corollairement, une fois le boulon de fixation **12** vissé ou fixé sur l'écrou souhaité de la jante **7**, l'utilisateur resolidarise le bras de couple **14** à l'extrémité supérieure dudit boulon, en actionnant de nouveau la lame **17** par le biais de la saillie **18**, jusqu'à encliquettement ou coopération de la lame **17** avec la gorge annulaire **22**.

Afin de favoriser la fixation du boulon **12** sur l'écrou souhaité de la jante **7**, ledit écrou comporte des mors ou pinces **15** dont la rétractation au sein du corps cylindrique du boulon **12** permet le serrage effectif autour d'un écrou de la jante, et donc une adaptation universelle à toutes dimensions d'écrous. Cette rétractation, pour la fixation du boulon **12** ou au contraire, la sortie des pinces **15** hors du boulon, est réalisée au moyen d'une vis **24** actionnable au niveau de l'extrémité supérieure **21** du boulon, en l'espèce, définissant un volume à section transversale six pans, apte à coopérer avec une clé six pans **25**.

L'extrémité supérieure **21** est accessible en raison de la lumière **26** présente au sein du bras de couple **14**.

Dans l'exemple décrit, cette clé six pans **25** est moulé dans le corps du bras de couple **14**.

En d'autres termes, le bras de couple **14** remplit non seulement sa fonction première, de transfert en position centralisée de l'action de serrage du flasque contre la jante, également la fonction de clé, et plus précisément de manche de la clé **25**. Le bras de couple **14** comporte à cet effet un orifice traversant **16**, au niveau de l'extrémité opposée à celle munie de l'ouverture traversante **26**, et apte à recevoir l'extrémité terminale 13 du cordon de serrage **10**.

Selon une variante non représentée, la clé **25** est désolidarisée du bras de couple **14**, ce dernier étant alors muni de logements prévus à cet effet, au sein desquels ladite clé est simplement clipsée/déclipsée.

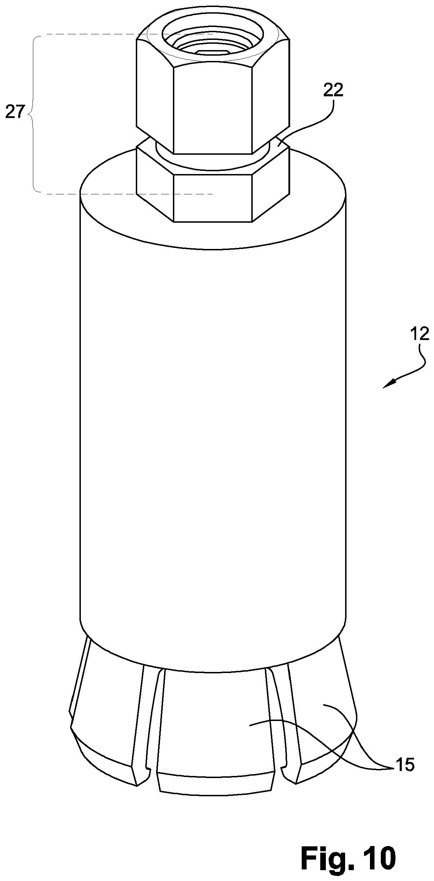

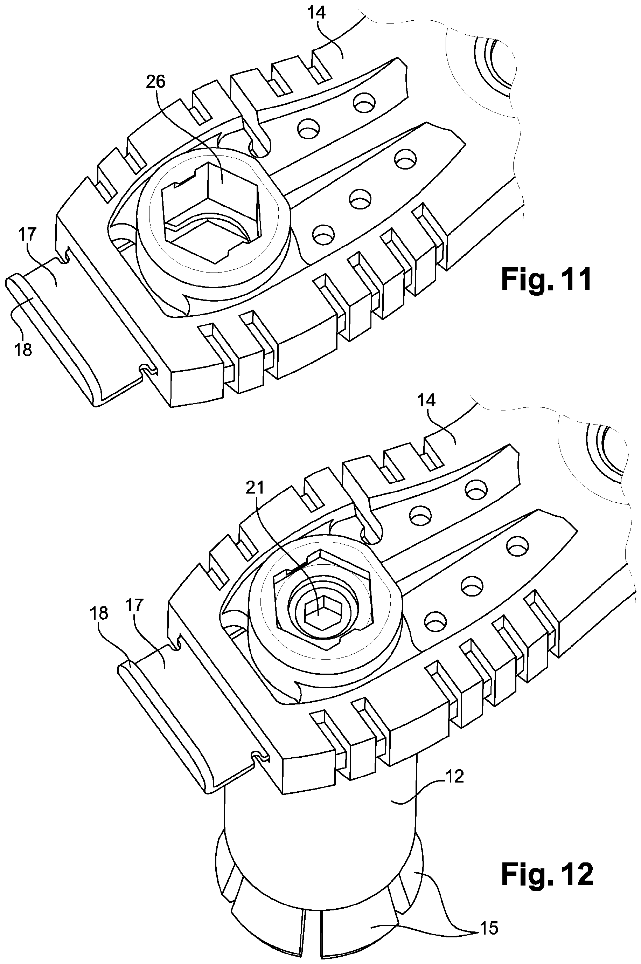

Selon une variante de cette première forme de réalisation, plus particulièrement décrite en relation avec les figures 10 à 12, l'extrémité libre du boulon de fixation **12** adopte un profil hexagonal, destiné à coopérer avec un profil de forme complémentaire définissant l'ouverture traversante **26** du bras de couple. Plus précisément, l'extrémité libre **27** est divisée en deux zones en raison de la gorge annulaire **22**, destinée, comme déjà dit à coopérer avec la lame **17**.

De par l'adoption d'un tel profil, l'introduction du bras de couple sur le boulon de verrouillage est facilitée, puisqu'aussi bien l'ouverture traversante **26** fait fonction de détrompeur, l'utilisateur n'ayant qu'à simplement pousser ledit bras de couple pour assurer l'encliquetage et donc la fixation dudit bras sur le boulon de fixation.

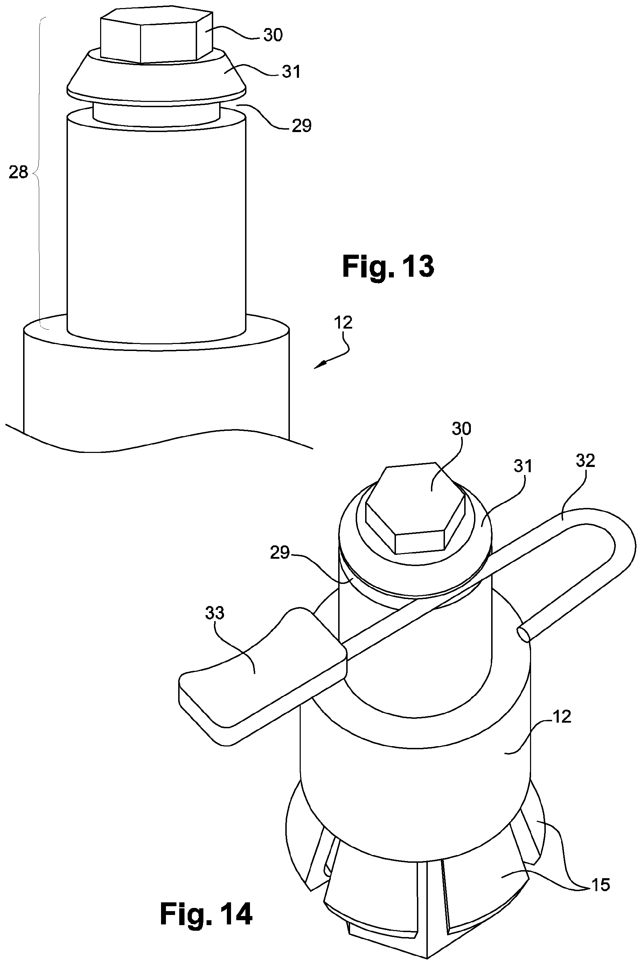

Selon une seconde forme de réalisation de l'invention décrite en relation avec les figures 13 à 16, le système de fixation réversible n'est plus constitué par une lame, mais par un fil **32**, de diamètre circulaire en l'espèce, destiné à coopérer avec une gorge annulaire **29** ménagée au voisinage de l'extrémité supérieure **28** du boulon de fixation **12**.

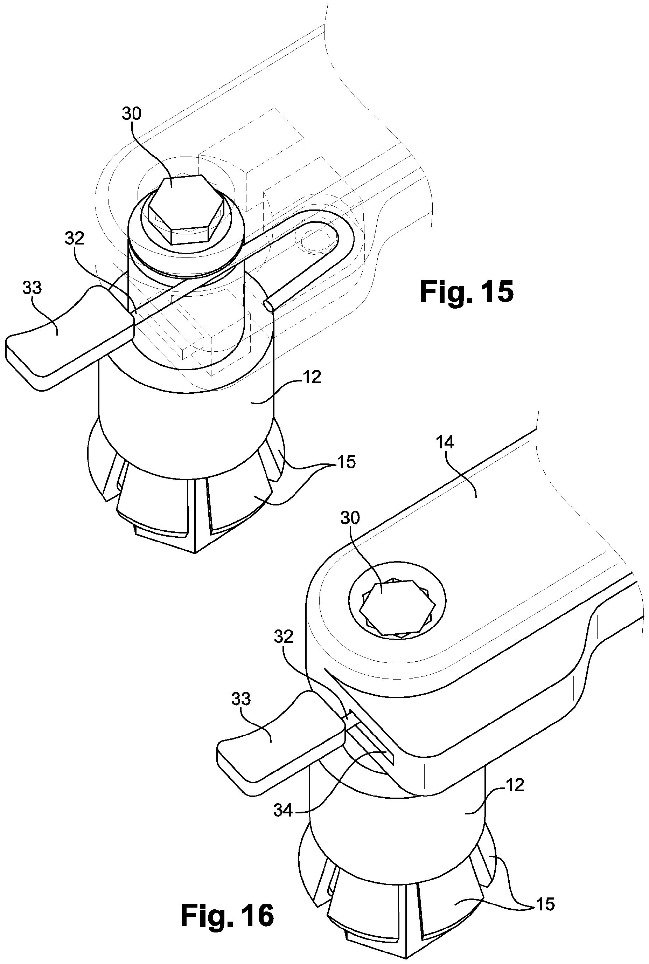

Ce fil **32**, solidaire du bras de couple **14**, fait également fonction de ressort, et en raison de son positionnement (voir figure 15), tend, en l'absence de contrainte extérieure, à venir se rabattre en direction du centre de l'ouverture traversante **26** ménagée au sein dudit bras de couple, et donc, lorsque le boulon de fixation est présent, à venir se loger dans la gorge annulaire **29**.

L'extrémité supérieure **28** du boulon de fixation comporte une zone **30** à profil hexagonal, afin de coopérer avec un profil de forme complémentaire de l'ouverture traversante **26** du bras de couple. Elle se prolonge par un portion tronconique **31**, dont le profil favorisa le glissement du fil **32**, jusqu'à ce que celui-ci vienne se loger dans la gorge annulaire **29** lors de la solidarisation du bras sur le boulon.

La désolidarisation du bras de couple hors du boulon s'effectue par simple actionnement d'une languette **33** solidaire du fil **32**, selon une direction perpendiculaire au boulon, le débattement du fil **32** étant rendu possible par la présence d'une lumière **34** au sein du bras de couple (voir figure 16).

On conçoit dès lors tout l'intérêt de la présente invention qui permet, en raison du caractère désolidarisable du boulon de fixation **12** hors du bras de couple **14**, de faciliter la fixation dudit boulon sur l'écrou considéré, sans encourir la moindre gêne générée par l'organe de traction flexible, puis une fois le boulon en place sur l'écrou de la jante, de simplement solidariser ledit bras de couple 14 sur l'extrémité supérieure du boulon.

## Revendications

1. Dispositif antidérapant pour roue de véhicule automobile comprenant :
- un chemin de roulement (3, 4) destiné à être plaqué sur la bande de roulement d'un pneumatique de roue de véhicule ;
- des bras radiaux (5) permettant de maintenir ledit chemin de roulement sur la bande de roulement dudit pneumatique, lesdits bras radiaux étant reliés à un organe central (8) fixé sur la jante (7) de la roue considérée par l'intermédiaire d'un ensemble solidarisable à l'un des écrous de ladite jante et constitué :
o d'un boulon de fixation (12) sur ledit écrou pourvu au voisinage de son extrémité libre d'une gorge annulaire (22, 29) ;
o d'un bras de couple (14), solidarisé de manière réversible à l'extrémité libre dudit boulon et orienté perpendiculairement à l'axe de révolution du boulon ;
o d'un organe de traction (10) solidarisé au voisinage de l'autre extrémité dudit bras ;
***caractérisé* en ce que** le bras de couple est muni de moyens (17 ; 32, 33, 34) aptes à coopérer avec la gorge annulaire, afin de solidariser / désolidariser le boulon de fixation sur le bras de couple.

2. Dispositif antidérapant pour roue de véhicule automobile selon la revendication 1, ***caractérisé* en ce que** le bras de couple (14)comporte une ouverture traversante (26), partiellement obturable au moyen d'une lame rigide (17) munie d'une lumière elle-même traversante (19), ladite lame étant montée coulissante au sein du bras de couple (14) selon une direction perpendiculaire à l'axe de révolution du boulon de fixation (12), et maintenue par défaut en position d'obturation partielle de l'ouverture traversante (26) du bras de couple (14), cette lame étant destinée à coopérer avec la gorge annulaire (22) du boulon.

3. Dispositif antidérapant pour roue de véhicule automobile selon la revendication 2, ***caractérisé* en ce que** la lame (17) coopère avec un ressort (20), notamment filaire, aux fins d'assurer le maintien par défaut de la lame (7) en position d'obturation de la lumière (26) du bras de couple (14).

4. Dispositif antidérapant pour roue de véhicule automobile selon l'une des revendications 2 et 3, ***caractérisé* en ce que**.la lame (17) présente une saillie externe (18), émergeant du bras de couple (14) et actionnable par l'utilisateur afin de libérer l'ouverture traversante (26) et corollairement, d'assurer la solidarisation / désolidarisation du bras de couple (14) sur et hors du boulon de fixation (12).

5. Dispositif antidérapant pour roue de véhicule automobile selon l'une des revendications 2 à 4, ***caractérisé* en ce que**. l'extrémité supérieure du boulon de fixation adopte un profil polygonal, et notamment hexagonal, et **en ce que** l'ouverture traversante (26) ménagée au sein du bras de couple est de forme complémentaire.

6. Dispositif antidérapant pour roue de véhicule automobile selon la revendication 1, ***caractérisé* en ce que** le bras de couple (14) comporte un fil de verrouillage (32) avec effet de rappel élastique en direction d'une lumière traversante (26) ménagée au sein dudit bras de couple, et destinée à recevoir ladite extrémité libre du boulon de fixation, ledit fil de verrouillage (32) maintenant par défaut en position opérationnelle de blocage le boulon sur le bras de couple par coopération avec la gorge annulaire (29).

7. Dispositif antidérapant pour roue de véhicule automobile selon la revendication 6, ***caractérisé* en ce que** le fil de verrouillage (32) est actionnable par l'utilisateur au moyen d'une languette (33) afin de permettre la désolidarisation du bras de couple hors du boulon de verrouillage.

8. Dispositif antidérapant pour roue de véhicule automobile selon l'une des revendications 1 à 7, ***caractérisé* en ce que** l'extrémité libre du boulon de fixation (12) présente une ouverture (21) de section transversale non circulaire, apte à coopérer avec un outil, et notamment une clé de forme correspondante (25), aux fins d'assurer la fixation ou la désolidarisation du boulon de fixation sur et hors de l'un des écrous de la jante (7).

9. Dispositif antidérapant pour roue de véhicule automobile selon la revendication 8, ***caractérisé* en ce que** la clé (25) est fixable réversiblement au sein du bras de couple (14), pourvu à cet effet des logements.

10. Dispositif antidérapant pour roue de véhicule automobile selon la revendication 8, ***caractérisé* en ce que** la clé (25) est intégrée dans le bras de couple (14), notamment par moulage, ce dernier faisant alors fonction de manche de la clé.

## Patentansprüche

1. Rutschfeste Vorrichtung (1) für Kraftfahrzeugreifen, bestehend aus:
• einer Führungsfläche (3, 4), die dazu bestimmt ist, gegen die Laufbahn eines Reifens eines Kraftfahrzeugrades gepresst zu werden;
• radiale Arme (5), mit denen diese Führungsfläche auf der Laufbahn dieses Reifens gehalten werden kann, wobei diese Arme mit einem Zentralorgan (8) verbunden sind, das auf der Felge (7) des entsprechenden Rades über eine Baugruppe befestigt ist, die an einer der Muttern dieser Felge befestigt werden kann und die besteht:
• aus einem Befestigungsbolzen (12) auf dieser Mutter, vorgesehen in der Nähe des freien Endstücks einer ringförmigen Nut (22, 29);
• eine Drehmomentstütze (14), die auf dem freien Endstück dieses Bolzens abnehmbar befestigt und senkrecht zur Drehachse des Bolzens angeordnet ist;
• einem Zugelement (10), das in der Nähe des anderen Endstücks dieses Arms befestigt ist;
**dadurch gekennzeichnet, dass** die Drehmomentstütze mit Mitteln (17, 32, 33, 34) ausgerüstet ist, die mit der Ringnut kooperieren können, um den Befestigungsbolzen auf der Drehmomentstütze zu befestigen / zu lösen.

2. Rutschfeste Vorrichtung für Kraftfahrzeugreifen gemäß Anspruch 1, **dadurch gekennzeichnet, dass** die Drehmomentstütze (14) eine durchführende Öffnung (26) enthält, die teilweise mittels einer starren Klinge (17) verschließbar ist, die mit einer Öffnung versehen ist, die selbst wiederum durchgehend (19) ist, wobei diese Klinge innerhalb der Drehmomentstütze (14) in einer Richtung senkrecht zur Drehachse des Befestigungsbolzens (12) verschiebbar montiert ist und standardmäßig in der teilweisen Verschlussposition der durchführende Öffnung (26) der Drehmomentstütze (14) gehalten wird, wobei diese Klinge dazu bestimmt ist, mit der Ringnut (22) des Bolzens zu kooperieren.

3. Rutschfeste Vorrichtung für Kraftfahrzeugreifen gemäß Anspruch 2, **dadurch gekennzeichnet, dass** die Klinge (17) mit einer Feder (20), insbesondere Drahtfeder, kooperiert, um dafür zu sorgen, dass die Klinge (7) standardmäßig in der Verschlussposition der Öffnung (26) der Drehmomentstütze (14) bleibt.

4. Rutschfeste Vorrichtung für Kraftfahrzeugreifen gemäß einem der Ansprüche 2 und 3, **dadurch gekennzeichnet, dass** die Klinge (17) einen äußeren Vorsprung (18) aufweist, der aus der Drehmomentstütze (14) herausragt und vom Benutzer betätigt werden kann, um die durchführende Öffnung (26) freizugeben und die Befestigung oder das Lösen der Drehmomentstütze (14) auf und außerhalb des Befestigungsbolzens (12) zu gewährleisten.

5. Rutschfeste Vorrichtung für Kraftfahrzeugreifen gemäß einem der Ansprüche 2 bis 4, **dadurch gekennzeichnet, dass** das obere Endstück des Befestigungsbolzens ein polygonales Profil, insbesondere hexagonal, hat und dass die durchführende Öffnung (26), die innerhalb der Drehmomentstütze ausgespart ist, eine komplementäre Form hat.

6. Rutschfeste Vorrichtung für Kraftfahrzeugreifen gemäß Anspruch 1, **dadurch gekennzeichnet, dass** die Drehmomentstütze (14), einen Verriegelungsdraht (32) mit elastischer Rückstellwirkung in Richtung einer durchführenden Öffnung (26) aufweist, die innerhalb dieser Drehmomentstütze ausgespart ist und zur Aufnahme dieses freien Endstücks des Befestigungsbolzens bestimmt ist, wobei sich dieser Verriegelungsdraht (32) standardmäßig in einer operativen Position der Sperrung des Bolzens auf der Drehmomentstütze durch Kooperation mit der Ringnut (29) befindet.

7. Rutschfeste Vorrichtung für Kraftfahrzeugreifen gemäß Anspruch 6, **dadurch gekennzeichnet, dass** der Verriegelungsdraht (32) vom Benutzer mittels einer Zunge (33) betätigt werden kann, um die Drehmomentstütze vom Verriegelungsbolzen zu lösen.

8. Rutschfeste Vorrichtung für Kraftfahrzeugreifen gemäß einem der Ansprüche 1 bis 7, **dadurch gekennzeichnet, dass** das freie Endstück des Befestigungsbolzens (12) eine Öffnung (21) mit einem nicht kreisförmigen Querschnitt aufweist, die mit einem Werkzeug, insbesondere einem Schlüssel entsprechender Form (25), kooperieren kann, um die Befestigung oder das Lösen des Befestigungsbolzens an und von einer der Muttern der Felge (7) zu gewährleisten.

9. Rutschfeste Vorrichtung für Kraftfahrzeugreifen gemäß Anspruch 8, **dadurch gekennzeichnet, dass** der Schüssel (25) innerhalb der Drehmomentstütze (14) lösbar befestigt ist, die zu diesem Zweck mit Aussparungen versehen ist.

10. Rutschfeste Vorrichtung für Kraftfahrzeugreifen gemäß Anspruch 8, **dadurch gekennzeichnet, dass** der Schlüssel (25) in die Drehmomentstütze (14) insbesondere durch Guss integriert ist, wobei diese dann als Schlüsselgriff dient.

## Claims

1. Anti-slip device for a motor vehicle wheel, incorporating:
• a travel track (3, 4) intended to be pressed against the tread of a vehicle wheel tire;
• radial arms (5) for maintaining the said travel track on the tread of the said tire, with the said arms being connected to a central assembly connectable to one of the nuts of the said rim, and being composed of:
. a securing bolt (12) on the said nut endowed with a ring-shaped groove near its free extremity (22, 29);
. a torque arm being reversibly integral with the free extremity of the said bolt, and being oriented perpendicularly to the axis of turning of the bolt;
. a traction device (10) being integral near the other extremity of the said arm; **characterized in that** the torque arm is endowed with means (17; 32; 33; 34) able to interact with the ring-shaped groove, in order to connect/disconnect the securing bolt to and from the torque arm.

2. Non-slip device for motor vehicle wheel in accordance with claim 1, **characterized in that** the torque arm (14) incorporates a traversing opening (26) that is partially blockable by means of a rigid blade (17) endowed with an opening that itself is fully traversing (19), with the said blade being mounted able to slide within the torque arm (14) in a direction perpendicular to the axis of rotation of the securing bolt (12), and maintained by default in a position of partial blocking of the traversing opening (26) of the torque arm (14), with this blade being intended to interoperate with the ring-shaped groove (22) of the bolt.

3. Non-slip device for motor vehicle wheel in accordance with claim 2, **characterized in that** the blade (17) interoperates with a spring (20) notably wire-based for the purpose of ensuring that the blade (7) is maintained by default in a position of blocking the opening (26) of the torque arm (14).

4. Non-slip device for motor vehicle wheel in accordance with one of claims 2 and 3, **characterized in that** the blade (17) has an external salient part (18) extending from the torque arm (14) and being operable by the user to release the traversing opening (26) and, in parallel, ensuring the connection/disconnection of the torque arm (14) to and from the securing bolt (12).

5. Non-slip device for motor vehicle wheel in accordance with one of claims 2 to 4, **characterized in that** the upper extremity of the securing bolt has a polygonal profile and notably hexagonal and by the fact that the traversing opening (26) existing within the torque arm is of complementary shape.

6. Non-slip device for motor vehicle wheel in accordance with claim 1, **characterized in that** the torque arm (14) incorporates a lock wire (32) with elastic return effect in the direction of a traversing opening (26) existing within the said torque arm, and being intended to accommodate the said free extremity of the securing bolt, with the said lock wire (32) maintaining the bolt on the torque arm in operational blocking position, by interoperation with the ring-shaped groove (29).

7. Non-slip device for motor vehicle wheel in accordance with claim 6, **characterized in that** the lock wire (32) is operable by the user by means of a tongue (33), to enable disconnection of the torque arm from the locking bolt.

8. Non-slip device for motor vehicle wheel in accordance with one of claims 1 to 7, **characterized in that** the free extremity of the securing bolt (12) has an opening (21) with a non-circular transversal cross-section, able to interoperate with a tool notably a wrench of corresponding shape (25) for the purpose of the securing or disconnection of the securing bolt to and from one of the nuts on the rim (7).

9. Non-slip device for motor vehicle wheel in accordance with claim 8, **characterized in that** the wrench (25) is reversibly securable within the torque arm (14), being endowed with lodgings for the purpose.

10. Non-slip device for motor vehicle wheel in accordance with claim 8, **characterized in that** the wrench (25) is incorporated into the torque arm (14), notably through molding, with the latter then acting as a wrench stem.
